# EUROPEAN PATENT APPLICATION

(11) **EP 4 451 431 A1**
(43) Date of publication of application: **23.10.2024**
(21) Application number: 22907891.0
(22) Date of filing: 13.12.2022
(51) Int. Cl.: H01M 50/103, H01M 50/531, H01M 50/553, H01M 50/176, H01M 50/342, H01M 50/169

(54) **SECONDARY BATTERY**

(30) Priority: 17.12.2021 KR 20210181514
(71) Applicant: Samsung SDI Co., Ltd, Gyeonggi-do 17084 (KR)
(72) Inventor: LEE, Hyun Soo, 150-20, Gyeonggi-do (KR)
(74) Representative: Gulde & Partner
(86) International application number: PCT/KR2022/020227
(87) International publication number: WO 2023/113424

(57) **Abstract**

In the present disclosure, a secondary battery in which seating and coupling of an electrode assembly may be easily performed is disclosed.

For example, a secondary battery including: a first case including a first plate portion having a rectangular shape, and a second plate portion and a third plate portion formed along a short side of the first plate portion; a second case including a rectangular-shaped first plate portion corresponding to the first case, and a second plate portion and a third plate portion formed along a long side of the first plate portion of the first plate portion; and an electrode assembly accommodated in an inner space in which the first case and the second case are coupled, wherein the first case and the second case are engaged with and coupled to each other, is disclosed.

## Description

### TECHNICAL FIELD

The present disclosure relates to a secondary battery in which seating and coupling of an electrode assembly may be easily performed.

### BACKGROUND ART

As a secondary battery is a battery, which can be charged and discharged, unlike a primary battery, which cannot be charged, a low-capacity secondary battery in which one battery cell is packaged in a pack form is used in small, portable electronic devices such as mobile phones and camcorders, and a large-capacity secondary battery in battery pack units in which tens of battery packs are connected is widely used as a motor driving power source in hybrid vehicles, electric vehicles, and the like.

This secondary battery is manufactured in various shapes, a cylindrical shape and a prismatic shape can be representative shapes, and the secondary battery is configured by embedding and installing an electrode assembly, which are formed by interposing a separator, which is an insulator, between positive and negative electrode plates and an electrolyte in a case, and installing a cap plate on the case. The electrode assembly is electrically connected to an electrode terminal through a current collector plate. In this case, a volume of the inside of the case changes according to a structure of the current collector plate. Accordingly, a secondary battery capable of implementing a greater capacity within a given size is needed.

### DISCLOSURE OF THE INVENTION

### TECHNICAL PROBLEM

The present disclosure is directed to providing a secondary battery in which seating and coupling of an electrode assembly may be easily performed.

### TECHNICAL SOLUTION

A secondary battery according to the present disclosure includes : a first case including a first plate portion having a rectangular shape, and a second plate portion and a third plate portion formed along a short side of the first plate portion; a second case including a rectangular-shaped first plate portion corresponding to the first case, and a second plate portion and a third plate portion formed along a long side of the first plate portion of the first plate portion; and an electrode assembly accommodated in an inner space in which the first case and the second case are coupled, wherein the first case and the second case are engaged with and coupled to each other is disclosed.

Here, the first case and the second case may be welded and coupled at an engaged boundary.

Further, the electrode assembly may have a length corresponding to a length of the first plate portion of the first case.

In addition, the electrode assembly may have terminal tabs protruding from both ends along a long side of the first case, and the second plate portion and the third plate portion of the first case may be coupled to the terminal tabs through a current collector plate formed on an inner surface that comes into contact with the electrode assembly.

In addition, the electrode assembly may include current collector tabs at both ends, and each of the current collector tabs may include a welded portion in which one end is bent and welded to the current collector plate.

In addition, the welded portion may be welded and coupled at an upper portion of a region overlapping the current collector plate.

In addition, the first case may include terminal plates, which are electrically connected to the current collector plate and protrude to the outside, in the second plate portion and the third plate portion.

In addition, the current collector plate and the terminal plates may be coupled to each other by terminal portions passing through the first case.

In addition, the second case may further include a vent formed in at least one region of the second plate portion.

In addition, the second case may be welded and coupled at an outer surface engaged with and coupled to the first case.

### ADVANTAGEOUS EFFECTS

According to the present invention, in the first case, since the second plate portion and the third plate portion are formed to extend in the width direction of the first plate portion, the electrode assembly may be inserted into the first plate portion in the state of being open in the longitudinal direction. Accordingly, the electrode assembly may be prevented from being damaged when being inserted.

Further, since welding of the first case and the second case can be performed at the outside of the cases, welding can be easy and welding foreign matter can be prevented from entering the inside.

### BRIEF DESCRIPTION OF THE DRAWINGS

The above and other objects, features and advantages of the present disclosure will become more apparent to those of ordinary skill in the art by describing in detail exemplary embodiments thereof with reference to the accompanying drawings, in which:
FIG 1 is a perspective view of a secondary battery according to an embodiment of the present disclosure;
FIG 2 is a perspective view illustrating a configuration of a first case in the secondary battery according to the embodiment of the present disclosure;
FIG 3 is an exploded perspective view illustrating a position where an electrode assembly is inserted into the first case in the secondary battery according to the embodiment of the present disclosure;
FIGS. 4A to 4D illustrate a process in which welding is performed in a state in which the electrode assembly is inserted into the first case in the secondary battery according to the embodiment of the present disclosure;
FIG 5 is an exploded perspective view illustrating a position where a second case is coupled to the first case in the secondary battery according to the embodiment of the present disclosure; and
FIG 6 illustrates a process in which welding of the first case and the second case is performed in the secondary battery according to the embodiment of the present disclosure.

### MODE FOR CARRYING OUT THE INVENTION

Here, preferable embodiments of the present disclosure will be described in detail with reference to the accompanying drawings.

The embodiments of the present disclosure are provided to more completely describe the present disclosure to those skilled in the art, the following embodiments may be modified into various other forms, and the scope of the present disclosure is not limited to the following embodiments. Rather, these embodiments are provided to make the present disclosure more meaningful and complete, and to fully convey the spirit of the present disclosure to those skilled in the art.

Further, in the following drawings, a thickness and a size of each layer are exaggerated or reduced for convenience and clarity of descriptions, and the same reference numerals indicate the same elements in the drawings. As used in the present specification, a term "and/or" includes any one of and all combinations of one or more of the listed items.

Further, spatially-related terms such as "beneath," "below," "lower," "above," and "upper" are used for easy understanding of one element or feature and another element or feature shown in the drawings. These spatially-related terms are provided for easy understanding of the present disclosure according to various manufacturing processes or usage states of the secondary battery, and not to limit the present disclosure. For example, when the secondary battery in the drawings is reversed, an element described as "beneath" or "below" "becomes "above" or "upper." Accordingly, "below" encompasses "above" or "below."

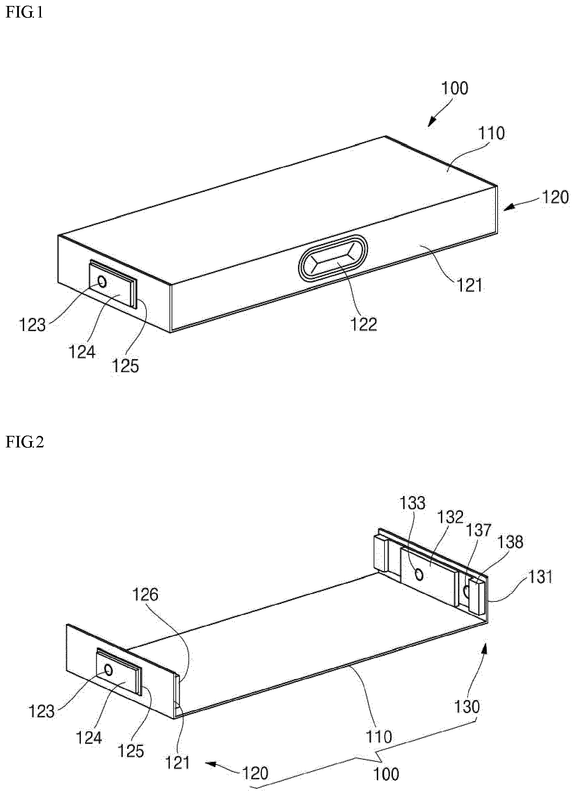

FIG 1 is a perspective view of a secondary battery according to an embodiment of the present disclosure.

Referring to FIG 1, the secondary battery according to the embodiment of the present disclosure may include a first case 100 and a second case 300. Further, although not shown in FIG 1, an electrode assembly may be accommodated in a space between the first case 100 and the second case 300.

The first case 100 is configured along three surfaces when viewed based on a hexahedron, and may have an approximately 'C' side surface shape. The first case 100 is formed of a conductive metal such as an aluminum alloy or nickel-plated steel, and an inner surface may be basically insulated to prevent an electrical short circuit from occurring inside. Further, in some cases, a first electrode of the electrode assembly may be electrically connected to the first case 100, and the first case 100 may act as the first electrode, for example, a positive electrode. Of course, in this case, an internal electrical short circuit may also be prevented by insulating the inside of the first case 100.

The second case 300 is also configured along three surfaces when viewed based on a hexahedron, and may have an approximately 'C' side surface shape. However, the second case 300 may have an inverted shape compared to the first case 100, and each corner coupled in a state of configuring the hexahedron while being engaged with the first case 100 may be welded. Accordingly, the second case 300 is also formed of a conductive metal such as an aluminum alloy or nickel-plated steel like the first case 100, and an inner surface may be basically insulated to prevent an electrical short circuit from occurring inside. Accordingly, a shape of an entire case in which the first case 100 and the second case 300 are coupled may seal the electrode assembly therein. Further, the second case 300 includes a vent 321 on one side surface, and accordingly, when an internal pressure increases in the entire case structure, since gas is discharged through rupture of the vent 321, the risk of explosion may be reduced.

Detailed configurations of the entire secondary battery including the first case 100 and the second case 300 will be described step by step below.

FIG 2 is a perspective view illustrating a configuration of the first case in the secondary battery according to the embodiment of the present disclosure.

Referring to FIG 2, in the secondary battery according to the embodiment of the present disclosure, the first case 100 has an approximately 'C' shape, and has a shape in which an upper end is open. The first case 100 may include a first plate portion 110 located at a first side, for example, a bottom, and a second plate portion 120 and a third plate portion 130 respectively bent in a vertical direction from both ends of the first plate portion 110.

The first plate portion 110 may be configured in a rectangular shape, and may be located at the bottom through a flat shape. Specifically, a length along a long side of the first plate portion 110 may be formed to correspond to a length of the electrode assembly. The second plate portion 120 and the third plate portion 130 are formed along a width direction along a short side of the first plate portion 110 and may extend therefrom.

The second plate portion 120 may be formed to be bent upward from one end of the first plate portion 110 at approximately 90 degrees. The second plate portion 120 may include a casing plate 121, a current collector plate 122, a terminal 123, a terminal plate 124, a first insulating plate 125, a second insulating plate 126, and a gasket 127.

Here, the casing plate 121 may be bent approximately vertically from the first plate portion 110 at approximately 90 degrees. Further, the casing plate 121 may have a hole therein through which the terminal 123 and the gasket 127 pass. In addition, since the casing plate 121 has the same width as the first plate portion 110, when the second case 300 of a corresponding shape is coupled at the top, a hexahedron may be formed.

The current collector plate 122 may be provided inside the casing plate 121. The current collector plate 122 may extend a certain length along the casing plate 121, and may be welded and electrically connected to the electrode assembly 200 to be described below at the side. Accordingly, the current collector plate 122 has the same polarity as the electrode assembly 200. Further, the current collector plate 122 may be electrically independent from the casing plate 121, and to this end, the second insulating plate 126 may be further formed between the current collector plate 122 and the casing plate 121.

The terminal 123 may be provided in the form of a rivet terminal. The terminal 123 may pass through a hole formed in the current collector plate 122 to be rivet-fastened to a lower surface of the current collector plate 122. Accordingly, the terminal 123 has the same polarity as the current collector plate 122.

The terminal plate 124 may be provided outside the current collector plate 122. The above-described terminal 123 may pass through a hole formed in the terminal plate 124 to protrude to the outside of the terminal plate 124 and may be fastened by riveting. Accordingly, the terminal plate 124 may have the same polarity as the terminal 123. Further, the terminal plate 124 may be electrically independent from the casing plate 121, and to this end, the first insulating plate 125 may be further formed between the terminal plate 124 and the casing plate 121.

The first insulating plate 125 and the second insulating plate 126 may be located between the terminal plate 124 and the casing plate 121 and between the current collector plate 122 and the casing plate 121, respectively. The first and second insulating plates 125 and 126 may be made of an electrically insulating material, and common polyethylene (PE) or polypropylene (PP) may be applied. However, in some cases, the first insulating plate 125 may be made of an electrically conductive material to electrically connect the casing plate 121 and the terminal plate 124.

The gasket 127 may be formed between the terminal 123 and the casing plate 121. The gasket 127 may seal a gap formed between the terminal 123 and the casing plate 121 to prevent an electrolyte therein from leaking to the outside. Further, the gasket 127 may be made of an electrical insulating material like the above-described first and second insulating plates 125 and 126 so that electrical independence is achieved between the terminal 123 and the casing plate 121.

Meanwhile, the third plate portion 130 may be formed to be bent upward from the other end of the first plate portion 110 at approximately 90 degrees. Like the second plate portion 120, the third plate portion 130 may include a casing plate 131, a current collector plate 132, a terminal 133, a terminal plate 134, a first insulating plate 135, a second insulating plate 136, and a gasket 137. Since detailed configurations of the third plate portion 130 may be configured the same as those of the second plate portion 120 except that polarities are opposite, detailed description will be omitted.

Meanwhile, the casing plate 131 of the third plate portion 130 may further include a separate liquid injection hole 138. The liquid injection hole 138 may be used to inject an electrolyte into an inner space after the first case 100 and the second case 300 are coupled to each other with the electrode assembly 200 located therein, and after injection, the liquid injection hole 138 may be sealed through a separate liquid injection stopper. However, the liquid injection hole 138 may be omitted when the inner electrode assembly 200 is provided as an all-solid-state battery having a gel or solid type electrolyte.

Hereinafter, a process in which the electrode assembly 200 is coupled to the first case 100 will be described.

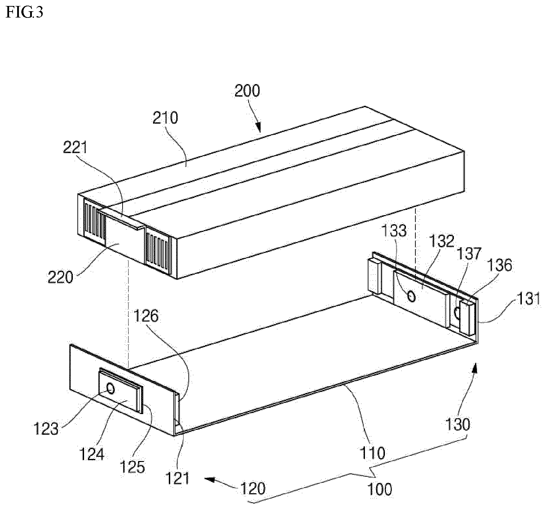

FIG 3 is an exploded perspective view illustrating a position where the electrode assembly is inserted into the first case in the secondary battery according to the embodiment of the present disclosure.

Referring to FIG 3, the electrode assembly 200 may be arranged along a longitudinal direction of the first case 100, and both ends may be respectively coupled to the second plate portion 120 and the third plate portion 130 of the first case 100. Further, an outer surface of the electrode assembly 200 may be wrapped by an insulating tape 210, however, electrode tabs 220 exposed at both ends of the electrode assembly 200 may be respectively formed.

The insulating tape 210 may electrically separate the electrode assembly 200 from the first plate portion 110 of the first case 100 to prevent an electrical short circuit. Further, for convenience of drawing, only a first electrode tab 220 formed at one end is shown in FIG 3, but a second electrode tab of a corresponding shape is also located at an opposite side, and detailed coupling will be described below.

The electrode assembly 200 is formed by stacking a plurality of laminates of a first electrode plate, a separator, and a second electrode plate each formed in a thin plate or film shape. Here, the first electrode plate may operate as a first polarity, for example, a positive electrode, and the second electrode plate may operate as a second polarity, for example, a negative electrode. Of course, according to the selection of those skilled in the art, the first electrode plate and the second electrode plate may be disposed with different polarities.

The first electrode plate is formed by applying a first electrode active material such as a transition metal oxide to a first electrode current collector formed of a metal foil such as aluminum, and includes a first electrode uncoated portion, which is a region where the first electrode active material is not applied. The first electrode uncoated portion provides a path for current flow between the first electrode plate and the outside.

Further, the first electrode uncoated portions may be formed to overlap at the same position when the first electrode plates are stacked. The first electrode uncoated portion is formed to protrude to one side of the electrode assembly 200, and the first electrode tab 220 is connected to the first electrode uncoated portion and has the same polarity as the first electrode plate.

The first electrode plate of the electrode assembly 200 is coupled along a side surface of the electrode assembly 200 along the first electrode uncoated portion, however, the first electrode plate may include a welded portion 221 bent from the upper portion to protrude. As will be described below, this welded portion 221 may be disposed to overlap the current collector plate 122 provided on the second plate portion 120 of the first case 100 in a vertical direction, and then may be coupled through welding.

The second electrode plate is formed by applying a second electrode active material such as graphite or carbon to a second electrode current collector formed of a metal foil such as copper or nickel, and includes a second electrode uncoated portion, which is a region where the second electrode active material is not applied.

Further, the second electrode uncoated portions may also be formed to overlap at the same position when the second electrode plates are stacked, and may protrude to the other side of the electrode assembly 200 to be coupled to a second electrode tab 230.

The separator is located between the first electrode plate and the second electrode plate to prevent a short circuit and enable movement of lithium ions. The separator may be made of polyethylene, polypropylene, or a composite film of polyethylene and polypropylene. Meanwhile, a material of the separator does not limit the scope of the present disclosure.

The electrode assembly 200 is substantially accommodated between the first case 100 and the second case 300 together with the electrolyte. The electrolyte may be composed of an organic solvent such as ethylene carbonate (EC), propylene carbonate (PC), diethyl carbonate (DEC), ethyl methyl carbonate (EMC), or dimethyl carbonate (DMC), and a lithium salt such as LiPF₆ or LiBF₄. Further, the electrolyte may be a liquid, solid, or gel.

Meanwhile, in the first case 100, since the second plate portion 120 and the third plate portion 130 are formed to extend in the width direction of the first plate portion 110, the electrode assembly 200 may be inserted into the first plate portion 110 in a state of being open in the longitudinal direction. Accordingly, since the first case 100 has a large opening, which is open in the longitudinal direction, the electrode assembly 200 may be prevented from being damaged when inserted into the first case 100.

Hereinafter, a process in which welding is performed in a state in which the electrode assembly 200 is inserted into the first case 100 will be described.

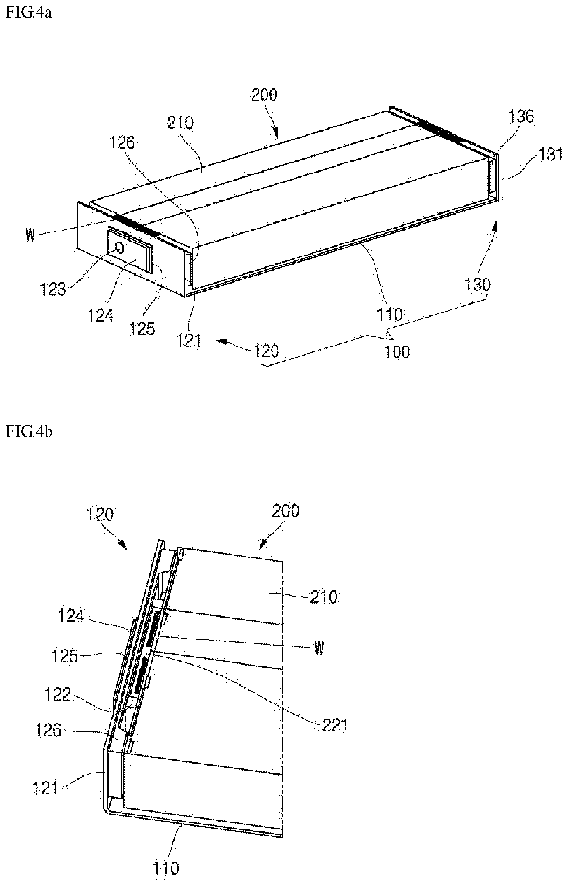

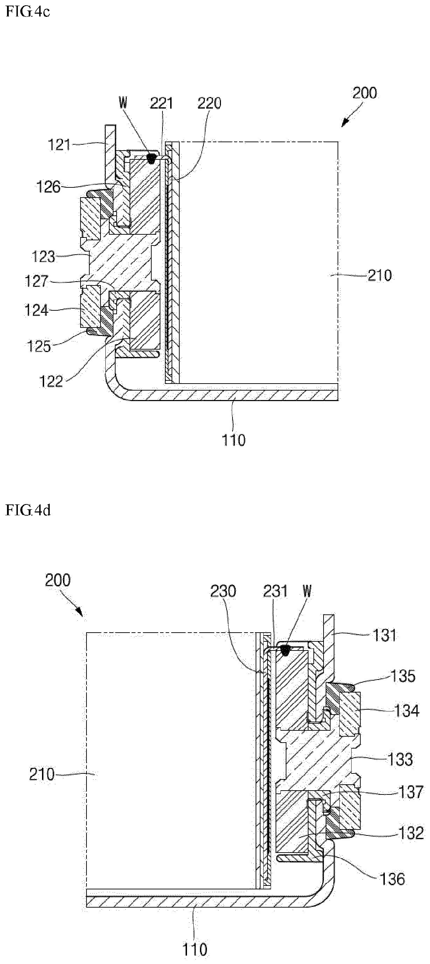

FIGS. 4A to 4D illustrate a process in which welding is performed in the state in which the electrode assembly is inserted into the first case in the secondary battery according to the embodiment of the present disclosure.

Referring to FIGS. 4A to 4C, in a state in which the electrode assembly 200 is seated on the first case 100, the welded portion 221 of the first electrode tab 220 is located on the current collector plate 122 of the second plate portion 120. That is, the welded portion 221 may be disposed to overlap the current collector plate 122 in a horizontal direction, and may be disposed in a state of coming into contact with an upper portion of the current collector plate 122 in a vertical direction. Further, welding (W) may be performed along an upper surface of the welded portion 221, and as a welding beam passes through the welded portion 221 to reach the current collector plate 122, final welding may be performed. In addition, as described above, the first electrode tab 220 of the electrode assembly 200, and the current collector plate 122, the terminal 123, and the terminal plate 124 provided in the second plate portion 120 of the first case 100 may have the same polarity.

Subsequently, referring to FIG 4D, like the first electrode tab 220, the electrode assembly 200 may include the second electrode tab 230. Further, the second electrode tab 230 may also have a welded portion 231 at an upper side, and welding (w) may be performed as the welded portion 231 is located on the current collector plate 132 of the third plate portion 130. Accordingly, as described above, the second electrode tab 230 of the electrode assembly 200, and the current collector plate 132, the terminal 133, and the terminal plate 134 provided in the third plate portion 130 of the first case 100 may have the same polarity.

Hereinafter, coupling of the first case and the second case will be described.

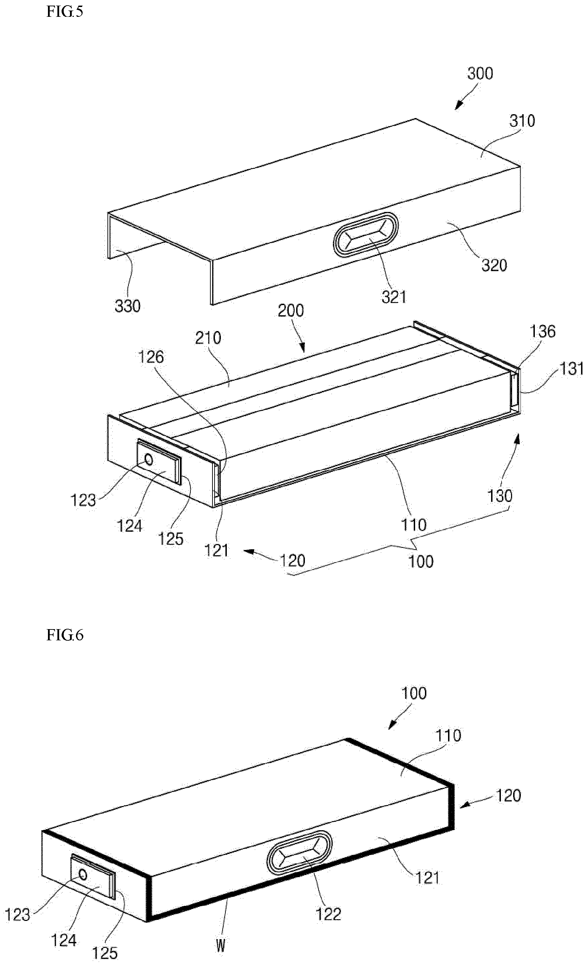

FIG 5 is an exploded perspective view illustrating a position where the second case is coupled to the first case in the secondary battery according to the embodiment of the present disclosure. FIG 6 illustrates a process in which welding of the first case and the second case is performed in the secondary battery according to the embodiment of the present disclosure.

Referring to FIG 5, the second case 300 may be provided in a shape that engages with the first case 100 and may be coupled at the top of the first case 100. The second case 300 has an approximately 'C' shape, and has a shape in which a bottom is open. The second case 300 may include a first plate portion 310 located at a first side, for example, a top, and a second plate portion 320 and a third plate portion 330 respectively bent in the vertical direction from both ends of the first plate portion 310. Configurations of the second plate portion 320 and the third plate portion 330 are formed along a longitudinal direction of the first plate portion 310, and may be configured in shapes, which are symmetrical to each other.

The first plate portion 310 may be configured in a rectangular shape, and may be located at the top through a flat shape. The first plate portion 310 may be formed to correspond to a longitudinal length of the electrode assembly.

The second plate portion 320 may be formed to be bent downward from one end of the first plate portion 310 at approximately 90 degrees. A vent 321 may be formed in one region of the second plate portion 320. For example, the vent 321 may be located approximately at a center of the second plate portion 320 in a longitudinal direction and a width direction. Further, the vent 321 may be formed to have a smaller thickness than the second plate portion 320. Accordingly, when an internal pressure increases in a space between the entire first case 100 and second case 300, since gas is discharged through rupture of the vent 321, the risk of explosion may be reduced.

Further, the third plate portion 330 may be formed to be bent downward from the other end of the first plate portion 310 at approximately 90 degrees.

As described above, since the second plate portion 120 and the third plate portion 130 of the first case 100 are formed to protrude upward along the width direction of the first plate portion 110, and the second plate portion 320 and the third plate portion 330 of the second case 300 are formed to protrude downward along the longitudinal direction of the first plate portion 310, as shown in FIG 5, a hexahedron may be formed when the first case 100 and the second case 300 are coupled.

Subsequently, referring to FIG 6, welding (W) may be performed at a boundary between the first case 100 and the second case 300 for sealing when the first case 100 and the second case 300 are coupled. This welding may be performed through laser welding, but the laser welding may be replaced with ultrasonic welding or resistance welding, according to the selection of those skilled in the art. Through this welding, a secondary battery having a final structure shown in FIG 1 may be manufactured.

As described above, in the first case 100, since the second plate portion 120 and the third plate portion 130 are formed to extend in the width direction of the first plate portion 110, the electrode assembly 200 may be inserted into the first plate portion 110 in the state of being open in the longitudinal direction. Accordingly, the electrode assembly 200 may be prevented from being damaged when being inserted.

Further, since the welding of the first case 100 and the second case 300 is performed at the outside of the cases 100 and 300 in a state after the electrode assembly 200 has already been accommodated in the inner space, welding may be easy and welding foreign matter may be prevented from entering the inside.

According to the present disclosure, in a lower first case, a second plate portion and a third plate portion extend in a width direction of a first plate portion, so that an electrode assembly is inserted through a large opening, which is open in a longitudinal direction, to prevent damage during insertion.

Further, since welding of the first case and the second case can be performed at the outside of the cases, welding can be easy and welding foreign matter can be prevented from entering the inside.

The above description is only one embodiment for performing the secondary battery according to the present disclosure, and the present disclosure is not limited to the above-described embodiment, and as claimed in the following claims, the technical spirit of the present disclosure is present in a range in which various modifications are possible by all of those skilled in the art without departing from the present disclosure.

## Claims

1. A secondary battery comprising:
a first case including a first plate portion having a rectangular shape, and a second plate portion and a third plate portion formed along a short side of the first plate portion;
a second case including a rectangular-shaped first plate portion corresponding to the first case, and a second plate portion and a third plate portion formed along a long side of the first plate portion; and
an electrode assembly accommodated in an inner space in which the first case and the second case are coupled,
wherein the first case and the second case are engaged with and coupled to each other.

2. The secondary battery of claim 1, wherein the first case and the second case are welded and coupled at an engaged boundary.

3. The secondary battery of claim 1, wherein the electrode assembly has a length corresponding to a length of the first plate portion of the first case.

4. The secondary battery of claim 1, wherein:
the electrode assembly has terminal tabs protruding from both ends along a long side of the first case; and
the second plate portion and the third plate portion of the first case are coupled to the terminal tabs through a current collector plate formed on an inner surface that comes into contact with the electrode assembly.

5. The secondary battery of claim 4, wherein:
the electrode assembly includes current collector tabs at both ends; and
each of the current collector tabs includes a welded portion in which one end is bent and welded to the current collector plate.

6. The secondary battery of claim 5, wherein the welded portion is welded and coupled at an upper portion of a region overlapping the current collector plate.

7. The secondary battery of claim 4, wherein the first case includes terminal plates, which are electrically connected to the current collector plate and protrude to the outside, in the second plate portion and the third plate portion.

8. The secondary battery of claim 7, wherein the current collector plate and the terminal plates are coupled to each other by terminal portions passing through the first case.

9. The secondary battery of claim 1, wherein the second case further includes a vent formed in at least one region of the second plate portion.

10. The secondary battery of claim 1, wherein the second case is welded and coupled at an outer surface engaged with and coupled to the first case.
